# EUROPÄISCHE PATENTANMELDUNG

(11) **EP 0 555 760 A2**
(43) Veröffentlichungstag der Anmeldung: **18.08.1993**
(21) Anmeldenummer: 93101681.0
(22) Anmeldetag: 04.02.1993
(51) Int. Cl.: C23C 8/60, C23C 24/08

(54) **Verfahren zur Vergütung der Oberfläche eines Körpers**

(30) Priorität: 10.02.1992 DE 4203773
(71) Anmelder: HÜLS AKTIENGESELLSCHAFT, D-45764 Marl (DE)
(72) Erfinder: Schulten, Rudolf, Prof. Dr., W-5100 Aachen (DE); Sahabi, Behzad, Dipl.-Ing., W-5100 Aachen (DE); Lorson, Harald, Dipl.-Ing., W-5100 Aachen (DE); Kusnanto, W-5100 Aachen (DE); Hurtado, Antonio M., Dr.-Ing., W-5100 Aachen (DE)
(74) Vertreter: Bauer, Hubert, Dipl.-Ing.

(57) **Zusammenfassung**

Zur Vergütung der Oberfläche eines Körpers wird dieser mit einem Mantel aus mindestens einem schmelzbaren Wirkstoff und Bindermaterial bedeckt und in Vakuum oder in einer inerten Atmosphäre zunächst auf eine Temperatur erhitzt, wodurch der Mantel in eine poröse Deckschicht mit äußerer Kruste umgewandelt wird. Sodann wird die Temperatur gesteigert, bis der in der Deckschicht enthaltene schmelzbare Wirkstoff verdampft ist. Einerseits dichtet der schmelzbare Wirkstoff die Außenseite der Deckschicht ab, und andererseits erzeugt der schmelzbare Wirkstoff die vergütete Oberfläche des Körpers. Nach dem Abkühlen des Körpers werden die Reste der Deckschicht entfernt. Der Körper ist mit einer porenfreien widerstandsfähigen Oberfläche versehen.

## Beschreibung

Die Erfindung betrifft ein Verfahren zur Vergütung der Oberfläche eines Körpers, wobei dieser zunächst mit einem Mantel aus mindestens einem schmelzbaren Stoff und einem Binder bedeckt wird. Der so präparierte Körper wird sodann einer Temperaturbehandlung über 500 °C ausgesetzt.

Zur Beschichtung unterschiedlicher Körper mit ebenso unterschiedlichen Stoffen sind Aufdampfverfahren, z.B. zur Si-Beschichtung, oder Vakuumsprayverfahren u.dgl. bekannt. Diese Verfahren erfordern zu ihrer Durchführung einen hohen Aufwand an Vorrichtungen und sind zudem arbeitsintensiv. Ein besonderer Nachteil der bekannten Verfahren ist darin zu sehen, daß sie nur sehr bedingt eine porenfreie Beschichtung ermöglichen, die zudem in vielen Fällen nicht hinreichend stabil an der Oberfläche des Körpers haftet.

Aus der EP 0 365 460 ist auch bereits ein Verfahren zum Aufbringen von Überzügen auf Körpern bekannt, bei dem die Pulvermetallurgie angewendet wird. Die Überzüge können beispielsweise in Form eines Mantels aus Graphit und einem Binder auf Wachs-, Polymer- oder Zellulosebasis bestehen. Einer zur Bildung des Mantels herzustellenden Paste kann ein Additiv, z.B. aus einer Kupfersulfat/Wasserlösung oder einer Eisenammoniumoxalat/Wasserlösung, zugegeben werden. Der mit einer solchen Paste ummantelte Körper wird einer oxidierenden Atmosphäre über 500 °C ausgesetzt, wodurch der Binder aus dem Überzugsmaterial entfernt wird.

Die angestrebte Verbesserung der Oberflächenbeschaffenheit eines Körpers führt bei diesem Überzugsverfahren ebenso wie bei den übrigen bekannten Beschichtungsverfahren zu einer der verbleibenden Überzugsstärke entsprechenden Veränderung der Körperabmessungen gegenüber seinen Ursprungsabmessungen.

Der Erfindung liegt die Aufgabe zugrunde, ein Vergütungsverfahren der eingangs beschriebenen Art vorzuschlagen, das sich nicht nur in einfacher Weise durchführen läßt und die Erzeugung einer abriebfesten porenfreien Oberfläche des Körpers ermöglicht, sondern auch die Einhaltung der Körperabmessungen gewährleistet.

Zur Lösung dieser Aufgabe wird von einem Verfahren der im Oberbegriff des Anspruchs 1 genannten gattungsgemäßen Art ausgegangen, das erfindungsgemäß die im kennzeichnenden Teil des Anspruchs 1 angegebenen Merkmale aufweist.

Der Mantel, mit dem der zu beschichtende Körper umhüllt wird, kann vorzugsweise aus einer knetbaren Masse hergestellt werden, die einen schmelzbaren Wirkstoff, einen Binder und hochtemperaturbeständige Füllstoffe, wie z.B. Karbide, Oxide u.dgl., enthält. Als schmelzbare Wirkstoffe können Si, Ti, Zr, Cu, Al, W/Si, Mo/Si, SiO₂ und dergleichen Stoffe verwendet werden. Als Binder verwendet man klebende teigbildende Substanzen, wie Getreidemehl, beispielsweise Weizenmehl, Roggenmehl oder Stärke, oder Polyäthylen und andere klebende Kohlenwasserstoffe. Der Mantel kann auch aus einer Kunststoffolie gebildet werden, welche den schmelzbaren Wirkstoff enthält.

In besonders vorteilhafter Weise kann der Mantel mehrere schmelzbare Wirkstoffe mit unterschiedlichen Partialdrücken enthalten, um die Wirkstoffe in Abhängigkeit des zeitlich veränderten Fahrprogramms der Temperatur nacheinander wirken zu lassen.

Vorteilhafte Materialmischungen zur Herstellung des Mantels ergeben sich aus den Patentansprüchen 4 bis 9, wobei in Abhängigkeit des jeweils eingesetzten schmelzbaren Wirkstoffes insbesondere die Binderanteile zwischen 25 bis 75 Gew.-% variieren können.

Durch Versuche konnte nachgewiesen werden, daß sich besonders vorteilhafte Vergütungsergebnisse erzielen lassen, wenn die Aufheizgeschwindigkeit bis 1000 °C zwischen 30 °C/min und 80 °C/min und die Aufheizgeschwindigkeit über 1000 °C zwischen 5 °C/min und 15 °C/min beträgt.

Die Auswirkungen der Deckschicht auf die zu vergütende Oberfläche lassen sich nur dann erschöpfend ausnutzen, wenn die Deckschicht mindestens 1 h auf der Maximaltemperatur gehalten wird.

Weiterhin hat sich durch Versuche erwiesen, daß es vorteilhaft ist, die Abkühlgeschwindigkeit der Deckschicht bis auf die Schmelztemperatur des schmelzbaren Stoffes mit einer Geschwindigkeit zwischen 5 °C/min und 15 °C/min vorzunehmen.

Je nach den Anforderungen, welche an die Vergütung gestellt werden, bietet es sich an, den Körper vor dem Aufbringen des Mantels mit einer Schlickerschicht aus Metallpulver oder pulverkeramischen Substanzen zu versehen.

Schließlich sieht eine Ausgestaltung der Erfindung vor, der Umgebung des Mantels während der Wärmebehandlung Spuren von Fremdgasen, wie z.B. N₂, zuzusetzen.

Nach dem erfindungsgemäßen Verfahren wird die zu vergütende Oberfläche eines Körpers also zunächst mit einer beispielsweise teigigen Masse vollständig ummantelt, wobei die Masse durch Kneten oder Spachteln aufgebracht wird und die so gebildete Ummantelung je nach Form des Körpers eine Dicke etwa von 1 - 10 mm haben kann. Dabei ist eine Homogenität oder gleichmäßige Dicke des Mantels nicht erforderlich. Dem Material des Mantels aus Pulvern eines verdampfbaren Wirkstoffes, wie z.B. Si oder Ti od. dgl., und einem Binder, wie Getreidemehl oder Stärke od.dgl., werden, wenn es erforderlich ist, Füllstoffe z.B. Karbide oder andere keramische Stoffe, in Pulverform beigefügt, um die Konsistenz des Mantels bei der folgenden Wärmebehandlung zu erhöhen.

Die das Mantelmaterial bildenden Pulver Werden mit reinem Wasser oder einem anderen Lösungsmittel, z.B. Alkohol, zu einer knetbaren Masse angerührt, die in der vorbeschriebenen Weise auf die Oberfläche des Körpers aufgebracht wird.

Der so präparierte Körper kann in einen Ofen eingebracht werden, um darin im Vakuum oder in einer inerten Atmosphäre während einer Zeitspanne von 1 - 5 h auf eine hohe Temperatur gebracht zu werden. Im Temperaturbereich von 200 - 800 °C wird der Binder im Mantel zersetzt, so daß er in eine Deckschicht mit einem porösen Stoffgerüst umgewandelt wird.

Bei weiterhin steigender Temperatur wird der schmelzbare Wirkstoff in der Deckschicht mobil und versucht, nach außen zu entweichen. Dabei wird die Deckschicht durch chemische Reaktion der flüchtigen Stoffe mit dem porösen Stoffgerüst oder durch Kapillarkondensation der flüchtigen Stoffe nach außen durch eine Kruste abgedichtet.

Bei Verwendung von Stickstoffspuren im Vakuum oder in der inerten Atmosphäre entstehen als weitere verdichtende Stoffe Nitride. Werden Spuren von Wasserdampf oder von anderen oxidierenden Gasen verwendet, entsteht bei Verwendung von Metallen als schmelzbare Wirkstoffe oxidisches Material an der Außenseite der Deckschicht und bildet eine Dichtungsschranke.

Der schmelzbare flüchtige Wirkstoff in der Matrix der Deckschicht gelangt, soweit er nicht mit dem vorhandenen zersetzten Binder und/oder den Füllstoffen reagiert, dampfförmig oder flüssig zur Grenzschicht zwischen dem zu vergütenden Körper und der Deckschicht. Dort wird er nach Eigenart des Körpers chemisch umgesetzt, durch Diffusionsprozesse legiert und/oder füllt die Poren des Körpers durch Kapillarkondensation. So bildet sich beispielsweise bei der Verdampfung von Si bei einem zu vergütenden Körper aus Graphit SiC, wobei die zunächst noch offenen Poren mit metallischem Si gefüllt werden. Besteht dagegen der zu vergütende Körper z.B. aus Stahl, so wird beim Schmelzen von z.B. Al dieses durch Diffusion eindringen und an der Oberfläche eine Fe/Al-Legierung erzeugen, deren Dicke von der Behandlungsdauer abhängig ist.

Nach dem Abkühlen kann die übriggebliebene Deckschicht beispielsweise durch Abkratzen oder Abbürsten völlig entfernt werden.

Als nach dem erfindungsgemäßen Verfahren zu vergütende Oberflächen kommen solche unterschiedlichster Gebilde in Betracht. So können die Oberflächen von Platten, Kugeln, Zylindern, Rohren oder unregelmäßigen Körpern, wie Turbinenschaufeln, ebenso vergütet werden wie die von keramischen Geweben. Auch können vor dem Aufbringen des Mantels in an sich bekannter Weise Schlickerschichten, z.B. aus Keramikpulver, auf den Körper aufgebracht werden, deren Poren durch den schmelzbaren Wirkstoff der Deckschicht verschlossen werden.

Die zu vergütenden Oberflächen können solche von Körpern aus Metallen, oxidischer Keramik, Karbiden, Nitriden, Graphit, verkohlten Naturstoffen und anderen hochtemperaturbeständigen Substanzen sein.

Um unterschiedliche Reaktionen in der Grenzschicht unabhängig voneinander und zeitliche gestaffelt ablaufen zu lassen, ist es lediglich erforderlich, daß die Deckschicht mehrere schmelzbare Wirkstoffe mit unterschiedlichen Schmelzpunkten enthält.

Das erfindungsgemäße Verfahren kann auch zur Mehrfachvergütung der Oberfläche eines Körpers wiederholt angewendet werden, so daß etwaige partielle Fehler einer Vergütungsbehandlung durch eine der nachfolgenden Vergütungsbehandlungen kompensiert werden.

Es versteht sich, den schmelzbaren Wirkstoff, den Binder und die Füllstoffe einerseits sowie die zu vergütenden Körper andererseits so auszuwählen, daß die Wärmedehnung des Körpermaterials und der übrigen Stoffe in etwa übereinstimmen.

Nachfolgend sind Anwendungsbeispiele des erfindungsgemäßen Verfahrens angegeben:

### 1. SiC/MoSi₂-Schicht auf Graphit

Zu vergütender Körper: Graphit (mit oder ohne Faserverstärkung)
Mantel: 60 % Si-Pulver, 20 % MoSi₂-Pulver, 20 % Stärke als Binder
Zersetzungstemperatur: 200 - 800 °C
Zeitdauer: 1-2 h
Reaktionstemperatur: 1400 - 1700 °C
Zeitdauer: ca. 1 h
Es bildet sich in der Körperoberfläche eine Schicht aus SiC und MoSi₂, wobei die Poren mit Si gefüllt sind. Die Körperoberfläche zeigt eine hohe Korrosionsbeständigkeit in Luft und Wasserdampf bis zu 1500 °C.

### 2. Al-Schicht auf Stahl

Zu vergütender Körper: Stahlplatten aus legiertem Stahl (Fe, Cr, Ni)
Mantel: 70 % Al-Pulver, 30 % Mehl als Binder
Zersetzungstemperatur: 200 - 800 °C
Zeitdauer: 1 - 2 h
Reaktionstemperatur: 800 - 1200 °C
Zeitdauer: 0,5-1,5 h
Es bildet sich in der Körperoberfläche eine Schicht aus einer Legierung von Fe, Cr, Ni, Al, die 10 - 100 µm in das Körperinnere hinreicht und nach Abkühlung anoxidiert ist und eine hohe Korrosionsbeständigkeit durch Bildung von Al₂O₃ hat.

### 3. Faserverstärkte Folien aus ZrSiO₄

Zu vergütender Körper: Mischung von 80% ZrO₂ und 20 % Wasserglas, in Wasser angemischt und in keramischen Fasergeweben aus Al₂O₃ eingelagert.
Mantel: 70 % SiO₂, 30 % Binder aus Al₂O₃-Pulver, mit Mehl und Wasser angeteigt.
Zersetzungstemperatur: 200 - 800 °C
Zeitdauer: 1-2 h
Reaktionstemperatur: 1.400 - 1.700 °C
Zeitdauer: 0,5-1,5 h
Das SiO₂ reagiert mit dem ZrO₂ zu ZrSiO₄, die Poren werden mit SiO₂ verstopft, das Natriumoxid des Wasserglases wird verdampft. Es bildet sich eine dichte faserverstärkte Folie aus ZrSiO₄.

### 4. Karbid-Schichten auf Graphit

Zu vergütender Körper: Graphit mit Schlickerschicht aus Karbiden, z.B. TiC, ZrC
Mantel: 50 % Zr-Pulver, 30 % ZrC, 20 % Mehl als Binder
Zersetzungstemperatur: 200 - 800 °C
Zeitdauer: 1-2 h
Reaktionstemperatur: 2000 °C
Zeitdauer: 1-2 h
Es bildet sich eine 100 - 200 um dicke Schicht aus Mischkarbiden (TiC, ZrC), die mit Zr-Metall an dem Graphit befestigt sind; die Poren sind mit Zr gefüllt. Die Schicht ist durch ZrC-Bildung korrosionsbeständig bis 2000 °C. Als flüchtiger Wirkstoff kann statt des Zr auch Ti verwendet werden. Die Reaktionstemperatur erniedrigt sich dabei auf 1.700 - 1.900 °C.

### 5. Faserverstärkte SiC-Folien

Zu vergütender Körper: Gewebe aus SiC-Fasern, in Kunststoff eingebettet
Mantel: 60 % Si, 20 % SiC, 20 % Polyäthylen als Binder
Zersetzungstemperatur: 200 - 800 °C
Zeitdauer: 1-2h
Reaktionstemperatur: 1400 - 1700 °C
Zeitdauer: 2-3 h
Es bildet sich eine korrosionsfeste biegbare Folie mit SiC-Faserverstärkung.

### 6. Silizierung von Holzflächen

Zu vergütender Körper: Holz in Form von Platten, Rohren und Sperrholz
Mantel: 70 % Si-Pulver, 30 % Mehl als Binder
Zersetzungstemperatur: 200 - 800 °C
Zeitdauer: 1-2 h
Reaktionstemperatur: 1.400 - 1.700 °C
Zeitdauer: 1-2 h
Im Temperaturbereich bis zu 800 °C wird das Holz verkohlt. Der verkohlte Körper wird durch Bearbeitung z. B. durch Schleifen oder Zerspanen auf Form gebracht. Dann erfolgt die Umhüllung mit dem Mantel, dessen Zersetzung und die Temperaturbehandlung der Deckschicht im Bereich von 1.400 - 1.700 °C. Es entsteht ein Kohlekörper mit einer dichten vergüteten Oberfläche aus SiC.

### 7. Hohlkörper aus SiC

Durch Verkohlung von Holz oder Kunststoffen wird durch Temperaturbehandlung bis zu 1.000 °C die gewünschte Vorform des Hohlkörpers hergestellt. Sie wird durch Schleifen oder Zerspanen oder dergleichen in die gewünschte Form gebracht und anschließend von außen mit dem Mantel aus 70 % Si und 30 % Mehl als Binder umgeben. Der Mantel wird durch Zersetzung in die Deckschicht umgewandelt, die einer Temperaturbehandlung im Bereich von 1.400 - 1.700 °C für ca. 1 h ausgesetzt wird. Es entsteht ein Körper mit einer Außenschicht von SiC.

### 8. Natürliche Körper mit SiC-vergüteter Oberfläche

Natürliche Körper, wie Z.B. Walnüsse, Bambusrohre, getrocknete Zweige u.a., werden mit einem Mantel umgeben. Dieser enthalt 70 % Si-Pulver und 30 % Mehl als Binder. Durch eine erste Temperaturbehandlung bei 700 - 800 °C werden der natürliche Körper und der Mantel gleichzeitig in ca. 1 h verkohlt. In einer nachfolgenden Temperaturbehandlung im Bereich von 1.400 - 1.700 °C werden die Kohlenstoffstrukturen während 1-2 h siliziert. Es entstehen Körper mit SiC-Überzügen, deren Form der Form der natürlichen Körper ähnlich ist.

### 9. Imprägnieren von keramischen Körpern mit Titansilizid

Poröse Körper, z.B. Graphit, Al₂O₃ u.a., werden mit einem Mantel aus 30 % Ti-Pulver, 40 % Si-Pulver und 30 % Mehl als Binder umgeben. Bei einer Temperaturbehandlung im Bereich von 200 - 800 °C während ca. 1 h wird der Mantel verkohlt. Bei einer weiteren Temperaturbehandlung im Bereich von 1.400 - 1.700 °C während 1 h wird das Si flüchtig, und bei einer folgenden Temperaturbehandlung von 1.700 - 2.100 °C ebenso während ca. 1 h wird das Ti flüchtig. Es entsteht an den Grenzflächen zwischen der Deckschicht und dem porösen Körper eine Zone mit geschlossenen Poren, in denen sich Titansilizid befindet.

### 10. Herstellung von BaTiO₃-Folien

Eine Folie mit einer Dicke von 0,01 bis 1 mm aus Magnesiumoxidfasern wird mit BaO gefüllt, welches mit Wasser, Alkohol oder anderen Flüssigkeiten aufgeschlämmt ist. Die Folie wird getrocknet und dieser Prozeß wiederholt, bis das BaO die Hälfte seiner theoretischen Dichte erreicht hat. Die so präparierte Folie wird mit Kunststoffolien, z.B. aus Polyäthylen, beidseitig abgedeckt, in denen sich bis zu 70 Vol.-% TiO₂ befindet. Im Temperaturbereich von 200 - 800 °C wird in 1 h der Kunststoff zu einem porösen Kohlenstoffgerüst zersetzt. Bei weiterer Temperaturerhöhung in den Bereich von 1.700 - 2.100 °C während 2 h verdampft das TiO₂, das sich teilweise mit dem Kohlenstoff zu TiC umsetzt, teilweise in die Folie diffundiert und mit dem BaO zu BaTiO₃ umsetzt. Es entsteht eine faserverstärkte Folie aus BaTiO₃ mit hoher Dielektrizitätskonstante, in der sich das ursprüngliche Magnesiumoxidfasergerüst befindet, ohne die physikalischen Eigenschaften der Folie wesentlich zu beeinflussen.

### 11. Dotierung einer Al₂O₃-Folie mit Na₂O

Eine Folie aus MgO wird mit Al₂O₃ gefüllt, welches mit Wasser, Alkohol oder einer anderen Flüssigkeit angeschlämmt ist. Die Folie wird getrocknet, und der Prozeß wird wiederholt, bis das Al₂O₃ 80 - 90 % seiner theoretischen Dichte erreicht hat. Darauf wird die Folie beidseitig mit einem Mantel versehen, der aus 10 % Na₂O und 90 % getrocknetem Wasserglas besteht. Die Folie wird in 0,5 h auf den Temperaturbereich von 300-500 °C gebracht. Dabei verfestigt sich der Mantel zu einer porösen Deckschicht mit einer äußeren Kruste. Bei weiterer Anhebung der Temperatur auf 800-900 °C wird Na₂O flüchtig und diffundiert in das Al₂O₃. Die Temperatur von 800 - 900 °C wird 3-5 h angehalten. Es entsteht eine dichte Folie aus β-Al₂O₃, in der sich das ursprüngliche Magnesiumoxidfasergerüst befindet, ohne die physikalischen Eigenschaften der Folie wesentlich zu beeinflussen.

### 12. Verkupferung oder Versilberung von natürlichen Körpern

Natürliche Körper, wie z. B. Walnüsse, Bambusrohre, getrocknete Zweige u.a., werden mit einem Mantel umgeben. Dieser enthält 70 % Cu- oder Ag-Pulver und 30 % Mehl als Binder. Durch eine erste Temperaturbehandlung im Bereich von 200 - 800 °C werden die natürlichen Körper und der Mantel in ca. 1 h gleichzeitig verkohlt. In einer nachfolgenden Temperaturbehandlung im Bereich von 1.400 - 2.000 °C werden die Kohlenstoffstrukturen in 0,5 - 1,5 h verkupfert oder versilbert. Es entstehen Körper mit Kupfer- oder Silberüberzügen, deren Form der Form der natürlichen Körper ähnlich ist.

Weitere Versuche haben ergeben, daß für den Mantel auch Kunststoffolien verwendet werden können. Diese werden analog zum teigigen Mantel aus Knetmasse mit den schmelzbaren Wirkstoffen und den Füllstoffen versehen. Ihre Anwendung empfiehlt sich insbesondere bei der Vergütung von plattenförmigen Körpern.

## Patentansprüche

1. Verfahren zur Vergütung der Oberfläche eines Körpers, wobei dieser zunächst mit einem Mantel aus mindestens einem schmelzbaren Wirkstoff und einem Binder bedeckt und so präpariert einer Temperaturbehandlung über 500 °C ausgesetzt wird, dadurch gekennzeichnet, daß die Temperaturbehandlung in Vakuum oder in einer inerten Atmosphäre durchgeführt wird und nach einer Umwandlung des Mantels in eine mindestens teilweise poröse Deckschicht mit äußerer Kruste die Temperatur so erhöht wird, daß der Erweichungspunkt des Körpers nicht überschritten, jedoch der schmelzbare Wirkstoff über seinen Schmelzpunkt erhitzt wird und diese Temperatur der Deckschicht so lange aufrechterhalten wird, bis der darin enthaltene geschmolzene Wirkstoff wenigstens teilweise verdampft ist und dabei durch Diffusion eine Oberflächenzone im Körper erzeugt hat, die im Oberflächenmaterial des Körpers mit diesem eine dichte Schicht bildet, worauf die Deckschicht abgekühlt und vom Körper entfernt wird.

2. Verfahren nach Anspruch 1, dadurch gekennzeichnet, daß der Mantel unter Verwendung von Si oder Ti oder Zr oder Cu oder Al oder W/Si oder Mo/Si oder SiO₂ als schmelzbarer Wirkstoff und unter Verwendung von Getreidemehl, beispielsweise Weizen- oder Roggenmehl, oder Stärke oder einem schmelzbaren Kunststoff, z.B. Polyäthylen, als Binder hergestellt wird.

3. Verfahren nach einem der Ansprüche 1 bis 2, dadurch gekennzeichnet, daß der Mantel unter Verwendung von mehreren schmelzbaren Wirkstoffen mit unterschiedlichen Partialdrücken gebildet wird.

4. Verfahren nach Anspruch 1 oder 2, dadurch gekennzeichnet, daß der Materialmischung für den Mantel bei Verwendung von Si als schmelzbarer Wirkstoff 40 - 60 Gew.-% Binderanteile und beispielsweise 20 - 30 Gew.-% Wasser zugesetzt werden.

5. Verfahren nach Anspruch 1 oder 2, dadurch gekennzeichnet, daß der Materialmischung für den Mantel bei Verwendung von Ti oder Zr als schmelzbarer Wirkstoff 25 - 40 Gew.-% Binderanteile und Wasser zugesetzt werden.

6. Verfahren nach Anspruch 1 oder 2, dadurch gekennzeichnet, daß der Materialmischung für den Mantel bei Verwendung von Cu als schmelzbarer Wirkstoff 50 - 75 Gew.-% Binderanteile und Wasser zugesetzt werden.

7. Verfahren nach Anspruch 1 oder 2, dadurch gekennzeichnet, daß der Materialmischung für den Mantel bei Verwendung von W/Si als schmelzbarer Wirkstoff 45 - 70 Gew.-% Binderanteile und Wasser zugesetzt werden.

8. Verfahren nach Anspruch 1 oder 2, dadurch gekennzeichnet, daß der Materialmischung für den Mantel bei Verwendung von Mo/Si als schmelzbarer Wirkstoff 25 - 50 Gew.-% Binderanteile und Wasser zugesetzt werden.

9. Verfahren nach Anspruch 1 oder 2, dadurch gekennzeichnet, daß der Materialmischung für den Mantel bei Verwendung von SiO₂ als schmelzbarer Wirkstoff 35 - 60 Gew.-% Binderanteile und Wasser zugesetzt werden.

10. Verfahren nach einem der Ansprüche 1 bis 9, dadurch gekennzeichnet, daß die Aufheizung bis 1.000 °C mit einer Geschwindigkeit zwischen 30 °C/min und 80 °C/min erfolgt.

11. Verfahren nach einem der Ansprüche 1 bis 10, dadurch gekennzeichnet, daß die Aufheizung über 1.000 °C mit einer Geschwindigkeit zwischen 5 °C/min und 15 °C/min erfolgt.

12. Verfahren nach einem der Ansprüche 1 bis 11, dadurch gekennzeichnet, daß die Deckschicht mindestens 1 h auf der maximalen Temperatur gehalten wird.

13. Verfahren nach einem der Ansprüche 1 bis 12, dadurch gekennzeichnet, daß die Abkühlung der Deckschicht bis auf die Schmelztemperatur des schmelzbaren Wirkstoffes mit einer Geschwindigkeit zwischen 5 °C/min und 15 °C/min erfolgt.

14. Verfahren nach einem der Ansprüche 1 bis 13, dadurch gekennzeichnet, daß der Körper vor dem Aufbringen des Mantels mit einer Schlickerschicht aus Metallpulver oder pulverkeramischen Substanzen versehen wird.

15. Verfahren nach einem der Ansprüche 1 bis 14, dadurch gekennzeichnet, daß der Umgebung des Körpers während der Wärmebehandlung Spuren von Fremdgasen, wie z. B. N₂, zugesetzt werden.
